# EUROPÄISCHE PATENTSCHRIFT

(11) **EP 3 877 145 B1**
(45) Veröffentlichungstag und Bekanntmachung des Hinweises auf die Patenterteilung: **10.01.2024**
(21) Anmeldenummer: 19804648.4
(22) Anmeldetag: 05.11.2019
(51) Int. Cl.: B29C 48/31, B29C 48/08, B29C 48/25, B29C 48/92, B29C 48/10, B29D 7/01

(54) **VERFAHREN UND VORRICHTUNG ZUR KONTROLLE DES DÜSENSPALTES EINER AUSTRITTSDÜSE VON EINER FLACHFOLIENMASCHINE**
METHOD AND DEVICE FOR CONTROLLING THE NOZZLE GAP OF THE OUTLET NOZZLE OF A FLAT FILM MACHINE
PROCÉDÉ ET DISPOSITIF PERMETTANT DE CONTRÔLER LA FENTE DE BUSE D'UNE BUSE DE SORTIE D'UNE MACHINE DE PRODUCTION DE FEUILLES PLATES

(30) Priorität: 06.11.2018 DE 102018127673
(43) Veröffentlichungstag der Anmeldung: 15.09.2021
(73) Patentinhaber: Windmöller & Hölscher KG, 49525 Lengerich (DE)
(72) Erfinder: SCHMITZ, Torsten, 48268 Greven (DE); COLELL, Waldemar, 49525 Lengerich (DE); GROEPPER, Bernd-Alexander, 49525 Lengerich (DE)
(86) Internationale Anmeldenummer: PCT/EP2019/080254
(87) Internationale Veröffentlichungsnummer: WO 2020/094647

(56) Entgegenhaltungen:
- EP-A1- 2 657 000
- WO-A1-2012/170713
- CH-A1- 702 058
- DE-A1- 2 229 924
- DE-A1- 4 020 728
- JP-A- H0 885 145
- JP-A- H01 257 023

## Beschreibung

Die vorliegende Erfindung betrifft ein Verfahren für eine Kontrolle eines Düsenspaltes einer Austrittsdüse für eine Folienbahn einer Flachfolienmaschine sowie eine Kontrollvorrichtung für die Durchführung eines solchen Verfahrens.

Es ist bekannt, dass Flachfolienmaschinen eingesetzt werden, um Folienprodukte herzustellen. Solche Folienprodukte weisen eine Vielzahl von unterschiedlichen Materialzusammensetzungen und Schichtenverhältnissen auf.

Die einzelnen Schichten können jeweils unterschiedliche Materialzusammensetzungen aufweisen, sodass in Summe je nach Materialzusammensetzung und Schichtenzusammenstellung die Folienbahn als Folienprodukt unterschiedliche Funktionseigenschaften und Qualitätskriterien erfüllen kann. Zur Herstellung ist eine Vielzahl von Extrusionsvorrichtungen vorgesehen, um eine Schmelze in der gewünschten Materialzusammensetzung mit der gewünschten Schichtenverteilung in einer großen Breite aus einem Düsenspalt einer Austrittsdüse auszubringen. Anschließend wird diese Materialschmelze auf eine Kühlwalze aufgebracht und von dieser rotierend abgezogen, wobei die Folienbahn abkühlt. Anschließend kann über ein Rollensystem die fertig hergestellte Folienbahn weitergefördert und auf einer Wickelwelle aufgewickelt werden. Zusätzlich ist es auch möglich die Schmelze zu beschichten oder zu kaschieren. So kann beispielsweise hierfür eine oder mehrere Flachbahnen der Schmelze zugeführt werden.

Wie in den Druckschriften JP H08 85145 A, WO 2012/170713 A1, JP H01 257023 A, DE 40 20 728 A1, CH 702 058 A1, DE 22 29 924 A1 und EP 2 657 000 A1 offenbart, ist es häufig wichtig, das Dickenprofil der Folienbahn zu kontrollieren bzw. zu regeln. Hinsichtlich der Qualität des Folienproduktes ist es dabei entscheidend, dass keine zu großen Schwankungen im Dickenprofil über die Zeit und über den Ort entstehen. Bei örtlichen Dickstellen würde dies ansonsten dazu führen, dass sich diese Dickstellen beim Aufeinanderaufwickeln auf der Wickelwelle kumulieren, sodass sogenannte Kolbenringe entstehen würden. Dünnstellen, also Bereiche im Dickenprofil mit zu wenig Material, können zu Fehlstellen in der Folienbahn bis hin zu Löchern oder Bereichen mit reduzierter Funktionalität führen.

Bei den bisherigen Lösungen wird dafür eine Regelung der Dicke verwendet. Es wird ein Dickenprofil in dem Bereich der Nettobreite der Folienbahn überwacht, um in diesem Abschnitt Abweichungen von einer Vorgabe eines Dickenprofils zu erkennen und ausgleichen zu können. Die bekannten Regelsysteme weisen dabei Regelschleifen auf, welche auf Stellmittel der Austrittsdüse einwirken können. Bei diesen Stellmitteln handelt es sich zum Beispiel um sogenannte Thermobolzen, welche je nach gewünschtem Kontrolleingriff vom Regelverfahren mit einer Temperatur, einer Heizleistung, einer Heizzeit, einem Heizintervall und/oder einer Heizspannung beaufschlagt werden können, sodass durch thermische Ausdehnung oder durch thermisches Zusammenziehen ein direkter Eingriff auf die geometrische Ausgestaltung des Düsenspaltes der Austrittsdüse möglich wird. Nachteilhaft bei den bekannten Lösungen ist es jedoch, dass es sich hierbei ausschließlich um ein Nachregeln der einzelnen Stellmittel auf Basis eines erkannten Dickenprofils handelt. Bei diesem Nachregeln findet die tatsächliche Ausgangssituation der einzelnen Stellmittel bzw. die tatsächliche Ausgangssituation des Ist-Profils des Düsenspaltes keinerlei Berücksichtigung. Dies hat zum einen den Nachteil, dass bei unbekanntem Ausgangspunkt die Regelung mit geringerer Wahrscheinlichkeit den gewünschten Erfolg haben wird, sodass häufig eine größere Anzahl von Regelschritten notwendig ist, um einen Regeleffekt zu erreichen. Zum anderen kann dies dazu führen, dass Querbeeinflussungen entlang der Querrichtung beim Kontrolleingriff in lokaler Weise an einer Stelle des Dickenprofils eine unerwünschte und nicht vorhersagbare Auswirkung an einer anderen Stelle des Dickenprofils aufweisen.

Es ist Aufgabe der vorliegenden Erfindung, die voranstehend beschriebenen Nachteile zumindest teilweise zu beheben. Insbesondere ist es Aufgabe der vorliegenden Erfindung, in kostengünstiger und einfacher Weise die Kontrollmöglichkeit des Düsenspaltes zu verbessern.

Die vorhandene Aufgabe wird gelöst durch ein Verfahren mit den Merkmalen des Anspruchs 1 und eine Kontrollvorrichtung mit den Merkmalen des Anspruchs 9. Weitere Merkmale und Details der Erfindung ergeben sich aus den Unteransprüchen, der Beschreibung und den Zeichnungen. Dabei gelten Merkmale und Details, die im Zusammenhang mit dem erfindungsgemäßen Verfahren beschrieben sind, selbstverständlich auch im Zusammenhang mit der erfindungsgemäßen Kontrollvorrichtung und jeweils umgekehrt, sodass bezüglich der Offenbarung zu den einzelnen Erfindungsaspekten stets wechselseitig Bezug genommen wird bzw. werden kann.

Ein erfindungsgemäßes Verfahren basiert also auf der grundsätzlich bekannten Lösung, das Dickenprofil der Folienbahn zu überwachen. Hierfür wird auch beim erfindungsgemäßen Verfahren das Dickenprofil der Folienbahn ermittelt. Dieses Ermitteln kann über die gesamte Breite entlang der Querrichtung der Folienbahn, aber jedoch zumindest über Teilabschnitte dieser Querrichtung der Folienbahn erfolgen. Auf Basis des Dickenprofils kann nun ein Vergleich stattfinden mit einem entsprechenden Vorgabeprofil. Das Vorgabeprofil kann dabei Schwellwerte aufweisen, sodass mit einem oberen und einem unteren Schwellwert das Vorgabeprofil auch als Vorgabekorridor ausgebildet sein kann. Beim Überschreiten der Vorgabewerte, zum Beispiel nach oben oder nach unten, kann die entsprechende Profilabweichung als Ergebnis des Vergleichs definiert werden. Überschreitet also an einer Stelle das Dickenprofil das entsprechende Vorgabeprofil, so kann nicht nur qualitativ, sondern auch in quantitativer Weise die Profilabweichung über dieses Vorgabeprofil hinaus festgestellt werden. Als abschließender Schritt wird erfindungsgemäß ein Kontrolleingriff so eingeführt, dass der Düsenspalt so verändert wird, dass die unerwünscht große Profilabweichung wieder ausgeglichen werden kann. Das Ziel des Kontrolleingriffs ist also die Kontrolle des Dickenprofils bzw. das Halten des Dickenprofils im definierten Bezug zu einem Vorgabeprofil bzw. innerhalb eines vordefinierten Vorgabekorridors.

Im Unterschied zu den bekannten Lösungen basiert der Kontrolleingriff mit dem Ziel das Dickenprofil so zu kontrollieren jedoch nun auf zwei unterschiedlichen und separaten Eingangswerten. Dabei handelt es sich zum einen um die Profilabweichung, welche qualitativ und/oder quantitativ in der Lage ist, die Richtung und die Ausprägung des Kontrolleingriffs zur Verfügung zu stellen. Zum anderen ist jedoch auch das Ist-Profil in den Kontrolleingriff einbezogen. Das Ist-Profil des Düsenspaltes ist dabei im Sinne der vorliegenden Erfindung in direkter oder indirekter Weise eine Wiedergabe der geometrischen Ausgangssituation des Düsenspaltes für den folgenden Kontrolleingriff. Auch das Ist-Profil erstreckt sich dabei in Querrichtung, insbesondere über die gesamte Breite, der Austrittsdüse. So wird je nach Einstellung der einzelnen Stellmittel sich ein unterschiedliches Dickenprofil als Ist-Profil ausbilden. Entscheidend für die Relation zum Dickenprofil der Folienbahn ist dabei die tatsächliche Wölbung und Krümmung an den einzelnen lokalen Stellen der oberen Düsenlippe. Je nachdem wie stark ein entsprechendes Stellmittel von oben auf die Düsenlippe oberhalb des Düsenspaltes mechanisch einwirkt, wird in entsprechender Weise mit dem Gegendruck der Schmelze innerhalb des Düsenspaltes sich eine Verformung in elastischer Weise für die Düsenlippe einstellen. Dies passiert nicht nur bei einem Stellmittel, sondern bei allen benachbarten Stellmitteln über die gesamte Breite in Querrichtung in der Flachfolienmaschine. Es ergibt sich also ein Ist-Profil, welches sich in komplexer Weise von der Gegendrucksituation der Materialschmelze von unten und der mechanischen Einwirkungsweise der Vielzahl der Stellmittel von oben auch in Querkorrelation als Kraftgleichgewicht ergibt. Dies wird bei bekannten Lösungen überhaupt nicht berücksichtigt, kann aber in einem erfindungsgemäßen Verfahren nun zusätzlichen Einfluss auf den Kontrolleingriff nehmen.

Wie voranstehend ersichtlich wird, handelt es sich bei dem Ist-Profil um eine komplexe geometrische Ausgestaltung, welche insbesondere eine unregelmäßige Ausgestaltung der Düsenlippe des Düsenspaltes ist. Eine solche Ausgestaltung kann lokal sein, zum Beispiel als lokale Biegekurve zwischen den Bolzen, und/oder global, zum Beispiel als Aufbiegung des gesamten Düsenkörpers unter dem Schmelzeinnendruck. Sie resultiert eben nicht nur aus einer einzelnen Einwirkbeziehung, sondern auf einer komplexen Korrelation einer Vielzahl von mechanisch benachbarten Einwirkungen der Stellmittel einerseits und den entsprechend wirkenden Gegenkräften der Schmelze auf der Unterseite der Düsenlippe andererseits.

Dadurch, dass nun in erfindungsgemäßer Weise nicht nur die Profilabweichung qualitativ und/oder quantitativ für den Kontrolleingriff berücksichtigt wird, sondern darüber hinaus die reale Ausgangssituation in Form des Ist-Profils des Düsenspaltes ebenfalls dem Kontrolleingriff zur Verfügung gestellt wird, kann in deutlich verbesserter Weise der Kontrolleingriff mit verbesserten Resultaten erzeugt werden. Dadurch, dass bei einem erfindungsgemäßen Verfahren also der Ausgangspunkt des notwendigen Kontrolleingriffs bekannt ist, kann nicht nur qualitativ, sondern auch quantitativ eine verbesserte Einwirkung erzielt werden. Beispielsweise ist es nun möglich zu erkennen, wo und mit welcher Relation ein Stellmittel eine entsprechende tatsächliche Verformung im Ist-Profil des Düsenspaltes zur Verfügung stellt. Ist beispielsweise an einer Stelle, bei welcher eine Profilabweichung nach unten, also eine unerwünschte Dünnstelle der Folienbahn, erkannt worden ist, im Ist-Profil des Düsenspaltes ebenfalls eine Schließstelle mit entsprechend dünner Ausflussmenge an Schmelze, so kann ein weiteres Verstellen dieses Stellmittels nach unten möglicherweise zu einer unerwünschten Verstärkung dieser Dünnstelle führen. In einem solchen Fall würde der Kontrolleingriff also ausgehend von dieser relativ starken Schließposition dieses Stellmittel möglicherweise entlang der Profilabweichung qualitativ und quantitativ nach oben bewegen, um in diesem Bereich der unerwünschten Dünnstelle von der Seite mehr Material hinzufügen zu können. Handelt es sich bei gleicher geometrischer Situation im Dickenprofil bei dieser Dünnstelle jedoch im Ist-Profil des Düsenspaltes um eine Position, bei welcher das Stellmittel und der zugehörige Düsenspalt relativ weit offen sind, so wird ein weiteres Öffnen des Düsenspaltes an dieser Position nur wenig oder sogar gar keine Wirkung zur Verfügung stellen. In einem solchen Fall würde ein konventionelles Verfahren ohne Berücksichtigung des Ist-Profils jedoch genau diesen Stellvorgang präferieren, sodass im Ergebnis keine oder im Zweifel sogar eine unerwünschte Bewegung des Dickenprofils mit einer weiteren Reduzierung dieser Dünnstelle die Folge wäre. Nur durch ein erfindungsgemäßes Verfahren ist es nun möglich, durch dieses Ist-Profil nun einen veränderten Kontrolleingriff zur Verfügung zu stellen, welcher zum Beispiel benachbarte Stellmittel weiter schließt, um in das bereits geöffnete Stellmittel an der lokalen Profilabweichung entsprechende Materialschmelze hinzubewegen bzw. hinzupressen.

Wie aus dem voranstehenden Beispiel ersichtlich wird, kann nun bei gleicher Profilabweichung, also bei gleicher Regelungsnotwendigkeit des Dickenprofils ein unterschiedlicher Kontrolleingriff erzeugt werden, wobei diese Unterscheidung auf Basis der Ausgangssituation des Düsenspaltes, nämlich des realen Ist-Profils basiert. Aus diesem Beispiel wird ebenfalls ersichtlich, dass nun in erfindungsgemäßer Weise der Kontrolleingriff deutlich zielgerichteter und ergebnisorientierter erfolgen kann. Während bei bekannten Lösungen aufgrund der unbekannten Ausgangssituation Kontrolleingriffe weniger Wirkung oder sogar konträre Wirkung als erwartet erzielen konnten, kann in erfindungsgemäßer Weise nun schneller, einfacher und vor allem zielgerichteter der Kontrolleingriff zu dem gewünschten Kontrollergebnis führen. Im Ergebnis führt dies dazu, dass die Folienbahn nicht nur stabiler produziert werden kann, sondern auch die Folienqualität mit höherer Sicherheit bzw. in engeren Vorgabeprofilgrenzen gehalten werden kann.

Es ist vorgesehen, dass bei einem erfindungsgemäßen Verfahren die Auswirkung des Kontrolleingriffs zusammen mit dem Ist-Profil als Resultat-Profil gespeichert wird zur Verwendung als Ist-Profil für einen nachfolgenden Kontrolleingriff. So ist es möglich, dass quasi in fortlaufender Fortschreibung das Ist-Profil zu einem Resultat-Profil in Form des Kontrolleingriffs führt, und dieses Resultat-Profil für den nächsten Durchlauf des erfindungsgemäßen Verfahrens wieder als Ist-Profil zur Verfügung gestellt wird. Es wird also kaskadierend das Verfahren durchgeführt, wobei immer das Resultat-Profil das bisherige Ist-Profil ersetzt. Dies ist eine besonders einfache und kostengünstige Lösung, da das Verfahren nach einer einmaligen Kalibrierung mit einem Start-Ist-Profil fortlaufend durchgeführt werden kann. So kann beispielsweise beim Einrichten der Maschine ein erstes Kalibrierprofil mechanisch ausgemessen werden, um anschließend als allererstes Ist-Profil diesem fortlaufenden Fortschreibeprozess zur Verfügung gestellt zu werden. Ein weiteres Kalibrieren kann notwendig oder sinnvoll sein, wenn nach einer langen Betriebszeit der Flachfolienmaschine die Abweichungen zwischen den Ist-Profilen und den Resultat-Profilen größer werden. Auch ist es möglich, zwischendurch den später noch erläuterten Normierschritt durchzuführen, um unerwünschte Abweichungen durch das fortlaufende Fortschreiben zu reduzieren oder sogar zu minimieren.

Ein weiterer Vorteil ist es, wenn bei einem erfindungsgemäßen Verfahren das Ist-Profil zumindest teilweise durch eine Simulation des Düsenspaltes erfasst wird. Eine solche Simulation kann zum Beispiel Eingangsparameter der Flachfolienmaschine und/oder Produktparameter der Folienbahn erfassen. Dabei kann es sich zum Beispiel um eine mathematische Simulation handeln, welche als Simulationsmodell in einer entsprechenden Kontrollvorrichtung hinterlegt ist. Durch die Vorgabe mechanischer Basiswerte des Materials des Düsenspaltes und der entsprechend einwirkenden Bauteile der Stellbolzen sowie der Gegenkräfte aus der Materialzusammensetzung der Schmelze kann nun ein realer Düsenspalt bzw. ein entsprechendes Ist-Profil simuliert werden. Diese Simulation kann selbstverständlich mit entsprechenden Kraftsensoren auch verifiziert bzw. ergänzt werden. So können Eingangsparameter des Betriebs der Flachfolienmaschine, aber auch separat für diese Simulation angeordnete Erkennungssensoren eingesetzt werden, um eine Basis für eine solche simulative Erfassung des Ist-Profils zur Verfügung zu stellen.

Es ist ebenfalls vorgesehen, dass bei einem erfindungsgemäßen Verfahren für den Kontrolleingriff zusätzlich ein Reckverhältnis der Folienbahn nach der Austrittsdüse berücksichtigt wird. Üblicherweise erfolgt das Abziehen der Folienbahn von der Kühlwalze schneller, als der entsprechende Materialausstoß durch den Düsenspalt durchgeführt wird.

Dadurch streckt sich bzw. reckt sich die Folienbahn in Produktionsrichtung in die Länge. Dieses Recken bzw. Strecken ist durch das Reckverhältnis definiert und explizit gewünscht, um durch das Ausrichten der länglichen Polymerisationsmoleküle unterschiedliche Folieneigenschaften, insbesondere unterschiedliche mechanische Eigenschaften der Folienbahn zu erzeugen. Dieses Reckverhältnis kann also als Basis oder zumindest als Berücksichtigungsmöglichkeit im Kontrolleingriff eingesetzt werden. An dieser Stelle wird sichtbar, dass ein direkter Einfluss auf die Qualität der Folienbahn über den erfindungsgemäß durchgeführten Kontrolleingriff genommen werden kann. Im Vergleich zu den bekannten manuellen Eingriffen durch den Bediener der Flachfolienmaschine erfolgt dies hier automatisch oder teilautomatisch mit entsprechend verbesserter Kontrollwirkung.

Ein weiterer Vorteil ist es, wenn bei einem erfindungsgemäßen Verfahren das Reckverhältnis hinsichtlich der Reckgeschwindigkeit und/oder der Reckbeschleunigung berücksichtigt wird. Dabei ist eine noch exaktere Möglichkeit gegeben, über den Zeitversatz der Reckgeschwindigkeit und der Reckbeschleunigung die Produkteigenschaften und die Qualität der Folienbahn zu überwachen. Auch ist es möglich, auf diese Weise Produkteigenschaften nicht nur zu regeln bzw. zu steuern, sondern auch für eine lückenlose Dokumentation aufzuzeichnen und nachzuhalten.

Ebenfalls von Vorteil ist es, wenn bei einem erfindungsgemäßen Verfahren das Ist-Profil des Düsenspaltes wenigstens teilweise als Stellprofil von Stellmitteln der Austrittsdüse erfasst wird. Das Stellprofil erlaubt damit ein indirektes Erfassen des Ist-Profils, da das Stellprofil der Stellmittel das reale Ist-Profil des Düsenspaltes erzeugt bzw. bewirkt. So können hier ebenfalls mathematische oder anderweitige Simulationsmittel infrage kommen, um die thermische Wirkung bzw. die Stellwirkung der einzelnen Stellmittel zu berücksichtigen. So sind Messungen an der Geometrie der einzelnen Stellmittel oder die Messung der Temperatur der Bolzen im Sinne der vorliegenden Erfindung denkbar. Es wird auf diese Weise also eine direkte Rückkopplung des Ist-Profils und auch des bereits besprochenen Resultat-Profils möglich. Selbstverständlich können solche direkten Einflussnahmen bzw. Erfassungsmöglichkeiten des Ist-Profils des Düsenspaltes auch mit weiteren Erfassungsmöglichkeiten des realen Ist-Profils des Düsenspaltes kombiniert werden.

Weitere Vorteile bringt es mit sich, wenn bei einem erfindungsgemäßen Verfahren das Ist-Profil des Düsenspaltes wenigstens teilweise als ein Mittelwert erfasst wird. Dies erlaubt es, feine Schwankungsbreiten bzw. kleine Veränderungen an der Oberfläche des Düsenspaltes zu reduzieren und den notwendigen Rechenaufwand deutlich zu verringern. Auf diese Weise kann der Mittelwert bzw. der schwankende Mittelwert eine Basis für den Kontrolleingriff ermöglichen, welcher nun mit Hilfe von reduziertem Rechenaufwand und damit auch reduzierter Geschwindigkeit zur Verfügung gestellt werden kann.

Ebenfalls von Vorteil ist es, wenn bei einem erfindungsgemäßen Verfahren der zeitliche Verlauf des Ist-Profils zumindest teilweise gespeichert wird. Dies erlaubt es zum einen, das Ist-Profil über den Verlauf des erfindungsgemäßen Verfahrens immer parat zu haben und für folgende Regel- und Kontrolleingriffe zu verwenden. Auch kann auf diese Weise ein sogenanntes Feedback für kommende Kontrolleingriffe zur Verfügung gestellt werden, sodass auf bekannte Resultat-Profile mit Bezug auf die dafür erfolgten Kontrolleingriffe zurückgegriffen werden kann. Der Aufbau einer entsprechenden Datenbank erlaubt es, das Verfahren als lernendes System auszulegen. Auch kann auf diese Weise ein Feedback für die Auslegung zukünftiger Flachfolienmaschinen erfolgen, sodass die Austrittsdüse bzw. deren rheologische Verteilung der Schmelze und der Düsenspalt bzw. der Fließkanal vor dem Düsenspalt in Zukunft entsprechend besser, stabiler oder mechanisch anders ausgelegt werden können.

Weitere Vorteile bringt es mit sich, wenn bei einem erfindungsgemäßen Verfahren der Kontrolleingriff zusätzlich wenigstens einen Produktparameter der Folienbahn berücksichtigt. Ein solcher Produktparameter kann zum Beispiel aus einer Datenbank eingelesen werden. Es kann sich zum Beispiel um die Materialzusammensetzung, ein Schichtverhältnis oder die Schichtdickenverhältnisse der einzelnen Schichten zueinander handeln. Auch Produktionsparameter der Flachfolienmaschine können hier zusätzlich oder alternativ zum Einsatz kommen.

Ebenfalls von Vorteil kann es sein, wenn bei einem erfindungsgemäßen Verfahren ein Normierungsschritt, insbesondere als normierter Kontrolleingriff, durchgeführt wird. Dies erfolgt insbesondere als Zwischenschritt, wenn die Kalibrierung für eine Erhöhung der Genauigkeit der Erfassung des Ist-Profils wieder notwendig wird. Zum Beispiel kann bei der Umstellung von einem Einsatzprodukt zu einem Folgeprodukt zusätzlich ein solcher Normierungsschritt durchgeführt werden, da er in diesem Zeitraum keinen Einfluss auf ein zu verkaufendes Endprodukt nehmen kann. Beispielsweise kann der Normierungsschritt eine digitale Normierung erfassen, sodass in der digitalen Auswertung die Stellwerte der einzelnen Stellmittel normiert, also zum Beispiel auf null gesetzt werden. Jedoch kann der Normierungsschritt auch eine reale Verstellung der Stellmittel auf einen gemeinsamen Nullwert bedeuten. Das kann heißen, dass die Normierung zur Verfügung stellt, dass alle Stellmittel auf einen gleichen Nullwert gefahren werden. Jedoch kann auch eine Normierungsvorgabe mit unterschiedlichen Stellquantitäten der einzelnen Stellmittel eine solche Normierungsposition spezifisch für jedes einzelne Stellmittel vorgeben.

Ebenfalls Gegenstand der vorliegenden Erfindung ist eine Kontrollvorrichtung für eine Kontrolle eines Düsenspaltes einer Austrittsdüse für eine Folienbahn einer Flachfolienmaschine. Eine solche Kontrollvorrichtung weist ein Erfassungsmodul für ein Erfassen eines Ist-Profils des Düsenspaltes auf. Weiter ist ein Ermittlungsmodul für ein Ermitteln eines Dickenprofils der Folienbahn vorgesehen. Darüber hinaus ist die Kontrollvorrichtung mit einem Vergleichsmodul ausgestattet für einen Vergleich des ermittelten Dickenprofils der Folienbahn mit einem Vorgabeprofil. Mit Hilfe eines Bestimmungsmoduls ist ein Bestimmen einer Profilabweichung als Ergebnis des Vergleichs möglich. Über ein Eingriffsmodul kann ein Kontrolleingriff durchgeführt werden zur Veränderung des Düsenspaltes auf Basis der Profilabweichung des Ist-Profils. Das Erfassungsmodul, das Ermittlungsmodul, das Vergleichsmodul, das Bestimmungsmodul und/oder das Eingriffsmodul sind vorzugsweise für die Durchführung eines erfindungsgemäßen Verfahrens ausgebildet. Damit bringt eine erfindungsgemäße Kontrollvorrichtung die gleichen Vorteile mit sich, wie sie ausführlich mit Bezug auf ein erfindungsgemäßes Verfahren erläutert worden sind.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Es zeigen schematisch:
- Figur 1: eine Ausführungsform einer erfindungsgemäßen Kontrollvorrichtung an einer Flachfolienmaschine,
- Figur 2: die Ausführungsform der Figur 1 in einem schematischen Querschnitt,
- Figur 3: eine Darstellung eines möglichen Dickenprofils,
- Figur 4: eine Darstellung eines möglichen Ist-Profils des Düsenspaltes,
- Figur 5: eine Darstellung einer Profilabweichung an einem Dickenprofil,
- Figur 6: eine Möglichkeit eines Stellprofils im Ist-Profil,
- Figur 7: die Ausführungsform der Figur 6 als Resultat-Profil,
- Figur 8: die Ausführungsform der Figuren 6 und 7 mit einem Normier-Profil und
- Figur 9: eine Darstellung in der Draufsicht für ein Reckverhältnis der Folienbahn.

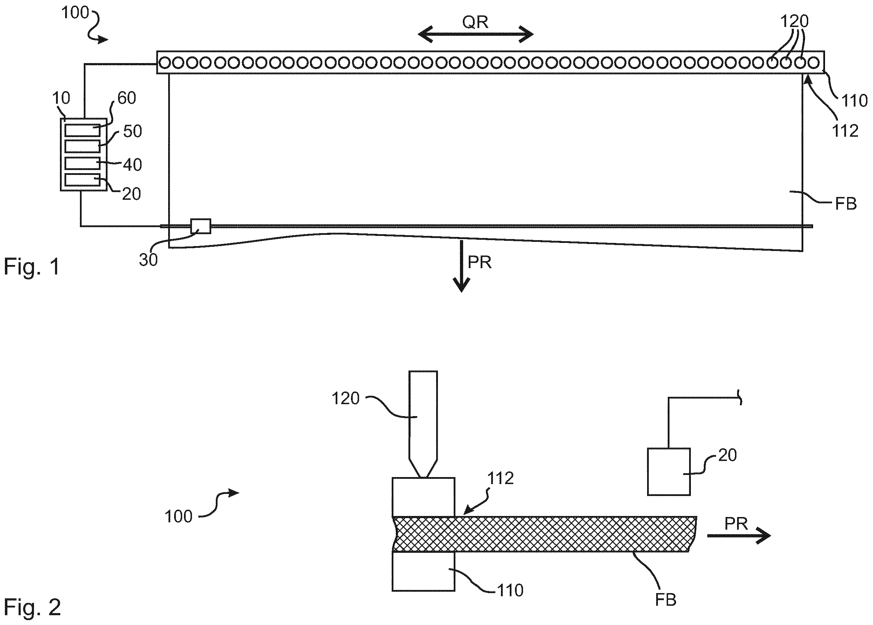

Die Figuren 1 und 2 zeigen schematisch eine Flachfolienmaschine 100. Diese ist entlang der Querrichtung QR mit einer Vielzahl von Stellmitteln 120 ausgestattet. Diese Stellmittel 120 können zum Beispiel Thermobolzen sein. Diese erlauben es, auf eine Düsenlippe einer Austrittsdüse 110 mechanisch einzuwirken, um entsprechend die Austrittsdicke an einem Düsenspalt 112 variieren zu können. Über diesen Düsenspalt 112 wird Materialschmelze in Form einer Folienbahn FB entlang der Produktionsrichtung PR ausgegeben.

Mit Hilfe eines Ermittlungsmoduls 30 ist eine Kontrollvorrichtung 10 in der Lage, ein Dickenprofil DP lokal oder über die gesamte Querrichtung QR für die Folienbahn FB aufzuzeichnen. Dabei kann das Ermittlungsmodul 30 auch bewegbar gelagert sein, um über eine Querverschiebung entlang der Querrichtung QR das Dickenprofil DP über einen möglichst großen Bereich der Folienbahn FB aufzeichnen zu können. Das erfasste Dickenprofil DP kann über das Ermittlungsmodul 30 tatsächlich erfasst und weiterverarbeitet werden.

Mit Hilfe des Erfassungsmoduls 20 ist es möglich, direkt oder indirekt das Ist-Profil des Düsenspaltes zu erfassen. Dabei kann es sich um eine separate von den Stellmitteln 120 beabstandete, aber auch an diesen angeordnete Sensormechanik handeln. Mit Hilfe eines Erfassungsmoduls 30 kann das Dickenprofil DP erfasst werden. So ist es möglich, zwei Eingangswerte in Form des Ist-Profils IP und in Form des Dickenprofils DP zu erfassen. Über ein Vergleichsmodul 40 und ein Bestimmungsmodul 50 können Vergleiche mit einem Vorgabeprofil VP nun zur Profilabweichung PA führen. Auf Basis dieser Profilabweichung PA und mit Hilfe des Ist-Profils IP kann ein Eingriffsmodul 60 nun entsprechende Kontrolleingriffe für die Stellmittel 120 zur Verfügung stellen. Die Figur 2 zeigt dabei einen möglichen Querschnitt, welcher den Düsenspalt 112 mit seiner Dickenverstellung durch das Stellmittel 120 gut darstellt.

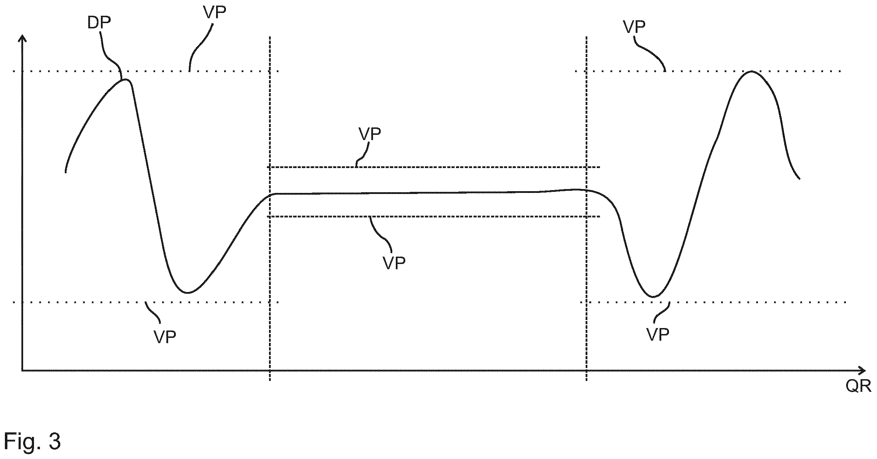

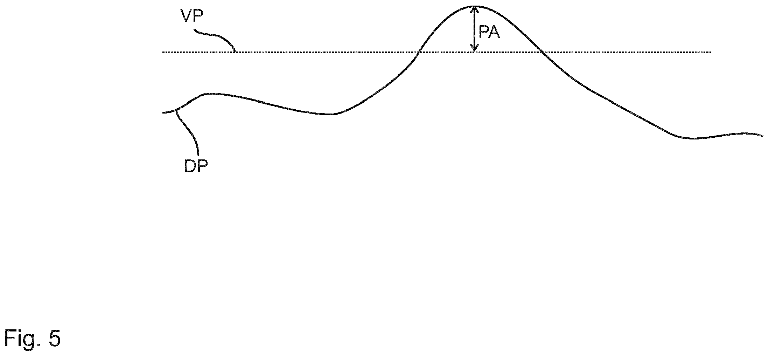

Figur 3 zeigt schematisch, wie ein solches Dickenprofil DP in Querrichtung QR ausgestaltet sein kann. Zwei Randabschnitte sind hier mit relativ großen Abweichungen und dementsprechend relativ breiten Vorgabeprofilen VP versehen. Entscheidend für die produzierte und mit hoher Qualität zu versehende Folienbahn FB ist der zentrale sogenannte Nettobereich, welcher mit entsprechend engen Vorgaben als Vorgabeprofile VP zur Verfügung gestellt ist. Eine entsprechende Abweichung ist in der Detaildarstellung zum Beispiel in der Figur 5 dargestellt. Dort findet sich ein Dickenprofil DP, welches an einer Stelle ein Vorgabeprofil VP überschreitet. Hier handelt es sich also um eine Dickstelle mit zu großer Stärke der Folienbahn FP, was sich hier durch eine erhöhte Profilabweichung PA bemerkbar macht. Diese Profilabweichung PA kann nun qualitativ und quantitativ dem Kontrolleingriff innerhalb der Kontrollvorrichtung 10 zugrunde gelegt werden.

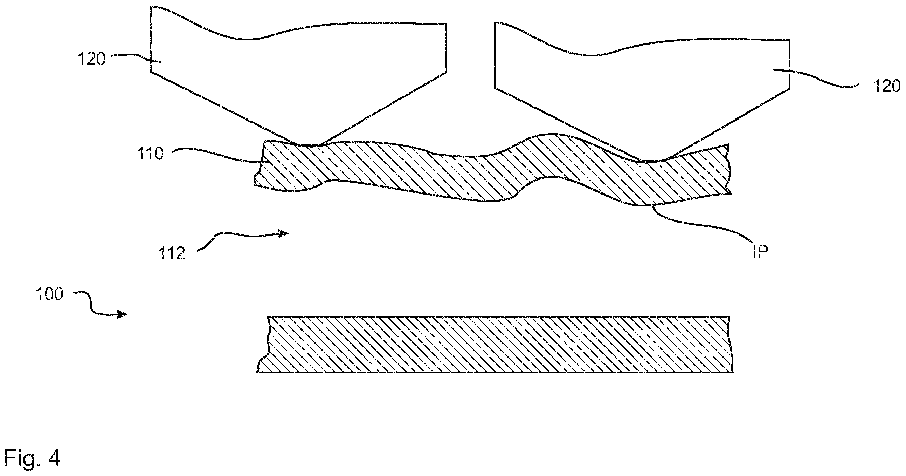

Figur 4 zeigt, wie durch mechanische Einwirkung durch die Stellmittel 120 und entsprechendem mechanischen Gegendruck der Schmelze aus dem Düsenspalt 112 sich eine komplexe geometrische elastische Verformung der Austrittsdüse 110 als Ist-Profil IP einstellt. Dabei bewirken die einzelnen Kräfte eine Querkorrelation, also die beiden Stellmittel 120 beeinflussen sich nebeneinander genauso, wie sich auch die Gegenkräfte in der Schmelzeverteilung quer beeinflussen können. Im Ergebnis entsteht ein sehr komplexes Ist-Profil IP, wie es schematisch in der Figur 4 dargestellt ist. Neben den dargestellten lokalen Veränderungen des Ist-Profils IP ist auch eine globale Veränderung denkbar.

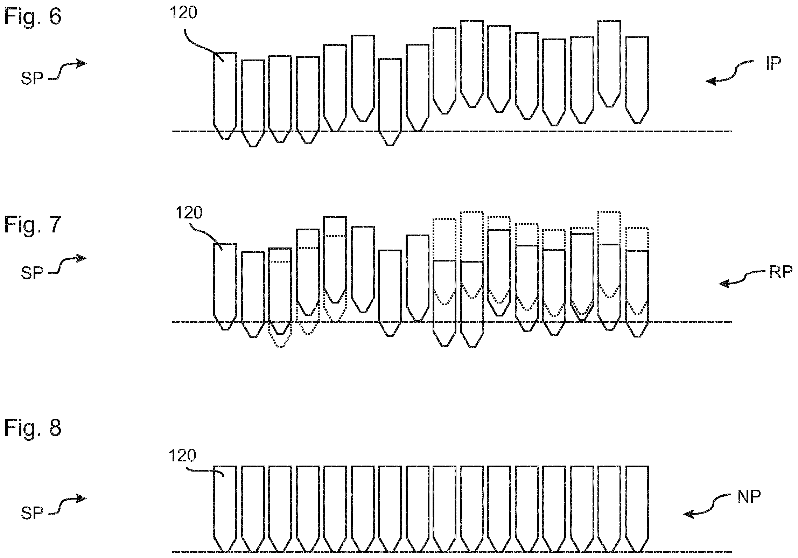

Während gemäß der Figur 4 ein solches Ist-Profil IP durch Messung, Simulation oder andere Mittel direkt erfassbar ist, können auch indirekte Möglichkeiten das Ist-Profil IP einem erfindungsgemäßen Verfahren zur Verfügung stellen. Die Figuren 6, 7 und 8 zeigen hier die Möglichkeit, ein Stellprofil SP der Stellmittel 120 zu verwenden. Hierfür können Positionssensoren, Thermosensoren, aber auch die Rückkopplung der Kontrolleingriffe in indirekter Weise Verwendung finden. Die Figur 6 zeigt dabei ein Ist-Profil IP, welches um eine Mittellinie als Mittelwert ausgebildet ist. Die einzelnen Stellmittel 120 können nun ausgehend von diesem Ist-Profil und auf Basis einer erkannten Profilabweichung PA zum Beispiel gemäß der Figur 5, mit einem Kontrolleingriff belegt werden. Dieser Kontrolleingriff führt für jedes oder zumindest teilweise für einige Stellmittel 21 zu einer Bewegung, wie sie die Figur 7 in ihrer Endposition zeigt. Somit handelt es sich hier um das Resultat-Profil RP, welches das Ergebnis des Kontrolleingriffs darstellt. Dieses Resultat-Profil RP kann nun als Ist-Profil IP für den nächsten Durchlauf eines Kontrolleingriffs gemäß einem erfindungsgemäßen Verfahren Verwendung finden.

Figur 8 zeigt nun, dass nach einer Vielzahl von Durchläufen des erfindungsgemäßen Verfahrens sich möglicherweise potenzierende Fehlerquellen einschleichen können. So ist es nun möglich, mit einem Normierschritt sämtliche Stellmittel 120 entweder auf digitaler, oder auf realer Basis in eine Normierposition gemäß dem Normier-Profil NP zu bringen. Ausgehend von diesem Normier-Profil NP kann dieses selbst nur als Ist-Profil IP für den nächsten Durchlauf des erfindungsgemäßen Verfahrens zum Einsatz kommen.

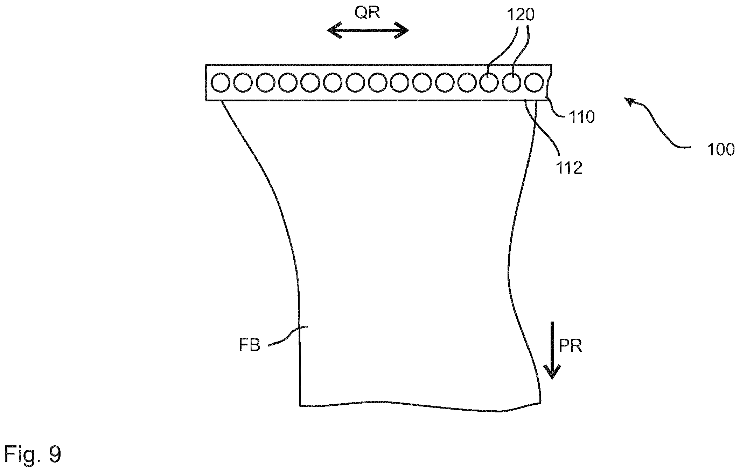

Die Figur 9 zeigt noch, dass auch das Reckverhältnis für das erfindungsgemäße Verfahren relevant sein kann. So ist es möglich, dass ein sogenannter Neck-In stattfindet, also die Folienbreite der Folienbahn FP in Richtung der Produktionsrichtung PR und bezogen auf die Querrichtung QR abnimmt, wenn mit entsprechend höherer Geschwindigkeit von der Kühlwalze die Folienbahn FB abgezogen wird.

### Bezugszeichenliste

- 10: Kontrollvorrichtung
- 20: Erfassungsmodul
- 30: Ermittlungsmodul
- 40: Vergleichsmodul
- 50: Bestimmungsmodul
- 60: Eingriffsmodul

- 100: Flachfolienmaschine
- 110: Austrittsdüse
- 112: Düsenspalt
- 120: Stellmittel

- FB: Folienbahn
- IP: Ist-Profil
- RP: Resultat-Profil
- NP: Normier-Profil
- SP: Stellprofil
- DP: Dickenprofil
- VP: Vorgabeprofil
- PA: Profilabweichung
- QR: Querrichtung
- PR: Produktionsrichtung

## Patentansprüche

1. Verfahren zur Kontrolle eines Düsenspaltes (112) einer Austrittsdüse (110) für eine Folienbahn (FB) einer Flachfolienmaschine (100), aufweisend die folgenden Schritte:
- Erfassen eines Ist-Profils (IP) des Düsenspaltes (112),
- Ermitteln eines Dickenprofils (DP) der Folienbahn (FB),
- Vergleich des ermittelten Dickenprofils (DP) der Folienbahn (FB) mit einem Vorgabeprofil (VP),
- Bestimmen einer Profilabweichung (PA) als Ergebnis des Vergleichs,
- Durchführen eines Kontrolleingriffs zur Veränderung des Düsenspaltes (112) auf Basis der Profilabweichung (PA) und des Ist-Profils (IP),
**dadurch gekennzeichnet, dass** für den Kontrolleingriff zusätzlich ein Reckverhältnis der Folienbahn (FB) nach der Austrittsdüse (110) berücksichtigt wird und **dass** die Auswirkung des Kontrolleingriffs zusammen mit dem Ist-Profil (IP) als Resultat-Profil (RP) gespeichert wird, zur Verwendung als Ist-Profil (IP) für einen nachfolgenden Kontrolleingriff.

2. Verfahren nach Anspruch 1, **dadurch gekennzeichnet, dass** das Ist-Profil (IP) zumindest teilweise durch eine Simulation des Düsenspaltes (112) erfasst wird.

3. Verfahren nach einem der vorangegangenen Ansprüche, **dadurch gekennzeichnet, dass** das Reckverhältnis hinsichtlich der Reckgeschwindigkeit und/oder der Reckbeschleunigung berücksichtigt wird.

4. Verfahren nach einem der vorangegangenen Ansprüche, **dadurch gekennzeichnet, dass** das Ist-Profil (IP) des Düsenspaltes (112) wenigstens teilweise als Stellprofil (SP) von Stellmitteln (120) der Austrittsdüse (110) erfasst wird.

5. Verfahren nach einem der vorangegangenen Ansprüche, **dadurch gekennzeichnet, dass** das Ist-Profil (IP) des Düsenspaltes (112) wenigstens teilweise als Mittelwert erfasst wird.

6. Verfahren nach einem der vorangegangenen Ansprüche, **dadurch gekennzeichnet, dass** der zeitliche Verlauf des Ist-Profils (IP) zumindest teilweise gespeichert wird.

7. Verfahren nach einem der vorangegangenen Ansprüche, **dadurch gekennzeichnet, dass** der Kontrolleingriff zusätzlich wenigstens einen Produktparameter der Folienbahn (FP) berücksichtigt.

8. Verfahren nach einem der voranstehenden Ansprüche, **dadurch gekennzeichnet, dass** ein Normierungsschritt, insbesondere als normierender Kontrolleingriff, durchgeführt wird.

9. Kontrollvorrichtung (10) zur Kontrolle eines Düsenspaltes (112) einer Austrittsdüse (110) für eine Folienbahn (FB) einer Flachfolienmaschine (100), aufweisend ein Erfassungsmodul (20) für ein Erfassen eines Ist-Profils (IP) des Düsenspaltes (112), ein Ermittlungsmodul (30) für ein Ermitteln eines Dickenprofils (DP) der Folienbahn (FB), ein Vergleichsmodul (40) für einen Vergleich des ermittelten Dickenprofils (DP) der Folienbahn (FB) mit einem Vorgabeprofil (VP), ein Bestimmungsmodul (50) für ein Bestimmen einer Profilabweichung (PA) als Ergebnis des Vergleichs, weiter aufweisend ein Eingriffsmodul (60) für ein Durchführen eines Kontrolleingriffs zur Veränderung des Düsenspaltes (112) auf Basis der Profilabweichung (PA) und des Ist-Profils (IP), **dadurch gekennzeichnet, dass** Erfassungsmodul (20), das Ermittlungsmodul (30), das Vergleichsmodul (40), das Bestimmungsmodul (50) und/oder das Eingriffsmodul (60) für die Durchführung eines Verfahrens mit den Merkmalen eines der Ansprüche 1 bis 8 ausgebildet ist.

## Claims

1. A method for controlling the nozzle gap (112) of the outlet nozzle (110) for a film web (FB) of a flat film machine (100), having the following steps:
- detecting an actual profile (IP) of the nozzle gap (112),
- ascertaining a thickness profile (DP) of the film web (FB),
- comparing the ascertained thickness profile (DP) of the film web (FB) with a default profile (VP),
- determining a profile deviation (PA) as the result of the comparison,
- carrying out a control intervention in order to change the nozzle gap (112) on the basis of the profile deviation (PA) and the actual profile (IP),
**characterized in that** for the control intervention a stretching ratio of the film web (FB) after the outlet nozzle (110) is additionally taken into account and
**that** the effect of the control intervention together with the actual profile (IP) is stored as a result profile (RP) for use as an actual profile (IP) for a subsequent control intervention.

2. The method according to claim 1,
**characterized in that** the actual profile (IP) is detected at least partially by a simulation of the nozzle gap (112).

3. The method according to any one of the preceding claims, **characterized in that** the stretching ratio in respect to the stretching speed and/or the stretching acceleration is taken into account.

4. The method according to any one of the preceding claims, **characterized in that** the actual profile (IP) of the nozzle gap (112) is detected at least partially as an actuating profile (SP) of actuating means (120) of the outlet nozzle (110).

5. The method according to any one of the preceding claims, **characterized in that** the actual profile (IP) of the nozzle gap (112) is detected at least partially as an average value.

6. The method according to any one of the preceding claims, **characterized in that** the time profile of the actual profile (IP) is at least partially stored.

7. The method according to any one of the preceding claims, **characterized in that** the control intervention additionally takes into account at least one product parameter of the film web (FP).

8. The method according to any one of the preceding claims, **characterized in that** a normalization step, in particular as a normalizing control intervention, is carried out.

9. A control device (10) for controlling a nozzle gap (112) of an outlet nozzle (110) for a film web (FB) of a flat film machine (100), having a detection module (20) for detecting an actual profile (IP) of the nozzle gap (112), a determination module (30) for determining a thickness profile (DP) of the film web (FB), a comparison module (40) for comparing the determined thickness profile (DP) of the film web (FB) with a default profile (VP), a determination module (50) for determining a profile deviation (PA) as a result of the comparison, further having an intervention module (60) for carrying out a control intervention for changing the nozzle gap (112) on the basis of the profile deviation (PA) and the actual profile (IP), **characterized in that** detection module (20), the determination module (30), the comparison module (40), the determination module (50) and/or the intervention module (60) is designed for carrying out a method with the features of one of claims 1 to 8.

## Revendications

1. Procédé pour le contrôle d'un interstice de buse (112) d'une buse de sorte (110) pour une bande de film (FB) d'une machine à film plat (100), comprenant les étapes suivantes :
- mesure d'un profil effectif (IP) de l'interstice de buse (112),
- détermination d'un profil d'épaisseur (DP) de la bande de film (FB),
- comparaison du profil d'épaisseur (DP) de la bande de film (FB) avec un profil prédéterminé (VP),
- détermination d'un écart de profil (PA) en résultat de la comparaison,
- exécution d'une intervention de contrôle pour la modification de l'interstice de buse (112) sur la base de l'écart de profil (PA) et du profil effectif (IP),
**caractérisé en ce que**, pour l'intervention de contrôle, un rapport d'étirage de la bande de film (FB) après la buse de sortie (110) est en outre pris en compte et **en ce que** l'effet de l'intervention de contrôle conjointement avec le profil effectif (IP) est enregistrée en tant que profil de résultat (RP), afin d'être utilisée en tant que profil effectif (IP) pour une intervention de contrôle suivante.

2. Procédé selon la revendication 1, **caractérisé en ce que** le profil effectif (IP) est mesuré au moins partiellement par une simulation de l'interstice de buse (112).

3. Procédé selon l'une des revendications précédentes, **caractérisé en ce que** le rapport d'étirage est pris en compte en ce qui concerne la vitesse d'étirage et/ou l'accélération d'étirage.

4. Procédé selon l'une des revendications précédentes, **caractérisé en ce que** le profil effectif (IP) de l'interstice de buse (112) est mesuré au moins partiellement comme un profil de réglage (SP) par des moyens de réglage (120) de la buse de sortie (110).

5. Procédé selon l'une des revendications précédentes, **caractérisé en ce que** le profil effectif (IP) de l'interstice de buse (112) est mesuré au moins partiellement comme une valeur moyenne.

6. Procédé selon l'une des revendications précédentes, **caractérisé en ce que** l'évolution dans le temps du profil effectif (IP) est au moins partiellement enregistrée.

7. Procédé selon l'une des revendications précédentes, **caractérisé en ce que** l'intervention de contrôle prend en compte en outre un paramètre de produit de la bande de film (FP).

8. Procédé selon l'une des revendications précédentes, **caractérisé en ce qu'**une étape de normalisation est exécutée, plus particulièrement sous la forme d'une intervention de contrôle de normalisation.

9. Dispositif de contrôle (10) pour le contrôle d'un interstice de buse (112) d'une buse de sortie (110) pour une bande de film (FB) d'une machine à film plat (100), comprenant un module de mesure (20) pour une mesure d'un profil effectif (IP) de l'interstice de buse (112), un module de détermination (30) pour une détermination d'un profil d'épaisseur (DP) de la bande de film (FB), un module de comparaison (40) pour une comparaison du profil d'épaisseur (DP) déterminé de la bande de film (FB) avec un profil prédéterminé (VP), un module de détermination (50) pour la détermination d'un écart de profil (PA) en tant que résultat de la comparaison, comprenant en outre un module d'intervention (60) pour la réalisation d'une intervention de contrôle pour la modification de l'interstice de buse (112) sur la base de l'écart de profil (PA) et du profil effectif (IP), **caractérisé en ce que** le module de mesure (20), le module de détermination (30), le module de comparaison (40), le module de détermination (50) et/ou le module d'intervention (60) est conçu pour l'exécution d'un procédé avec les caractéristiques de l'une des revendications 1 à 8.
